# DEMANDE DE BREVET EUROPEEN

(11) **EP 3 357 768 A1**
(43) Date de publication de la demande: **08.08.2018**
(21) Numéro de dépôt: 18153576.6
(22) Date de dépôt: 26.01.2018
(51) Int. Cl.: B60S 1/02

(54) **PROCEDE DE SUIVI DE L'UTILISATION D'UN SYSTEME D'ESSUYAGE D'UN VEHICULE AUTOMOBILE**

(30) Priorité: 02.02.2017 FR 1750895
(71) Demandeur: Valeo Systèmes d'Essuyage, 78322 Le Mesnil Saint Denis (FR)
(72) Inventeur: LALOI, Nathalie, 63500 ISSOIRE (FR)
(74) Mandataire: Valeo Systèmes d'Essuyage

(57) **Abrégé**

L'invention concerne un procédé 100 de suivi de l'utilisation d'un système d'essuyage d'un véhicule automobile 1, comprenant les étapes suivantes :
- une étape de collecte d'au moins une donnée relative au déclenchement du système d'essuyage 10,
- une étape de collecte d'au moins une donnée relative au véhicule 1 et/ou à son environnement,
- une étape de transformation de l'une au moins des données collectées aux étapes précédentes en une valeur, dite valeur de suivi,
- une étape de comparaison de la valeur de suivi à une valeur, dite valeur seuil prédéterminée,
- une étape d'enregistrement de l'une au moins des données collectées lorsque la valeur de suivi atteint ou dépasse la valeur seuil prédéterminée.

L'invention concerne encore un système d'essuyage 10 comprenant une unité de pilotage conçue de manière à mettre en oeuvre le procédé tel que décrit ci-dessus.

## Description

### DOMAINE TECHNIQUE DE L'INVENTION

L'invention concerne un procédé de suivi de l'utilisation d'un système d'essuyage d'un véhicule automobile. L'invention concerne encore une unité de pilotage conçue de manière à mettre en oeuvre un tel procédé.

### ARRIERE PLAN TECHNIQUE DE L'INVENTION

On connait des dispositifs de suivi de l'usure des dispositifs d'essuyage. Notamment, la demanderesse a déjà proposé dans la demande WO-A1-2013/159943 un procédé d'estimation de l'état d'usure d'un balai d'essuie-glace à partir d'un coefficient de friction du balai sur la vitre d'un véhicule automobile. Le coefficient de friction est calculé sur une vitre sèche et sa valeur est comparée à une valeur seuil pour déterminer l'état d'usure du balai. Ce type de procédés est efficace pour détecter une usure effective du dispositif d'essuie-glace.

Cependant, il existe un besoin de pouvoir alerter un utilisateur du véhicule automobile en amont de la détérioration du système d'essuyage.

### BREF RESUME DE L'INVENTION

L'un des objets de l'invention est de répondre à ce besoin. L'invention propose ainsi un procédé de suivi de l'utilisation d'un système d'essuyage d'un véhicule automobile, comprenant les étapes suivantes :
- une étape de collecte d'au moins une donnée relative au déclenchement du système d'essuyage,
- une étape de collecte d'au moins une donnée relative au véhicule et/ou à son environnement,
- une étape de transformation de l'une au moins des données collectées aux étapes précédentes en une valeur, dite valeur de suivi,
- une étape de comparaison de la valeur de suivi à une valeur, dite valeur seuil prédéterminée,
- une étape d'enregistrement de l'une au moins des données collectées lorsque la valeur de suivi atteint ou dépasse la valeur seuil prédéterminée.

Selon d'autres caractéristiques de l'invention qui peuvent être prises ensemble ou séparément :
- la valeur de suivi est comparée à une grille de valeurs seuils prédéterminées,
- la grille de valeurs seuils prédéterminées est stockée sur un serveur à distance du véhicule automobile, l'étape de comparaison comprenant une sous-étape de connexion, notamment via internet, audit serveur,
- la ou les valeurs seuils prédéterminées sont stockées sur un serveur à distance du véhicule automobile, l'étape de comparaison comprenant une sous-étape de connexion, notamment via internet, audit serveur,
- la au moins une donnée relative au véhicule et/ou à son environnement comprend une ou plusieurs données parmi la position géographique du véhicule, les conditions météorologiques, la présence de pluie ou de neige, la température extérieure, le niveau d'un réservoir de liquide de lave-glace, la date, l'heure, le type de balais d'essuie-glace, la durée de vie moyenne des balais d'essuie-glace et l'amplitude angulaire de pivotement des balais d'essuie-glace,
- l'enregistrement de l'une au moins des données collectées se fait dans un module de stockage du système d'essuyage,
- le procédé comprend une étape de suppression des données collectées et/ou de la valeur de suivi lorsque la valeur de suivi n'atteint ni ne dépasse la valeur seuil prédéterminée correspondante,
- le procédé comprend une étape de génération d'un signal d'avertissement, notamment à destination d'un utilisateur du véhicule automobile, lorsque la valeur de suivi atteint ou dépasse la valeur seuil prédéterminée correspondante,
- le signal d'avertissement est envoyé vers un téléphone portable de l'utilisateur,
- le procédé comprend en outre une étape d'affichage du signal d'avertissement sur le tableau de bord du véhicule automobile,
- le procédé comprend une étape d'affichage du signal d'avertissement sur un écran à bord du véhicule automobile.

L'invention concerne encore un système d'essuyage comprenant une unité de pilotage conçue de manière à mettre en oeuvre le procédé ci-dessus.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique d'un système d'essuyage d'un pare-brise de véhicule automobile ;
- la figure 2 est un ordinogramme d'un exemple de procédé, conforme à l'invention, de suivi de l'utilisation du système d'essuyage illustré à la figure 1;

### DESCRIPTION DETAILLEE DES FIGURES

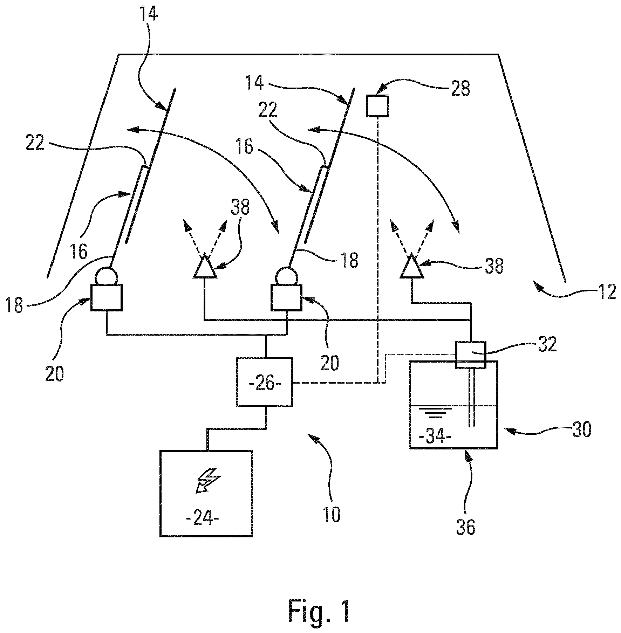

Comme illustré à la figure 1, le système d'essuyage 10 comprend ici deux balais d'essuie-glace 14. Chaque balai d'essuie-glace 14 est porté par un porte-balai 16 aussi appelé couramment bras d'essuie-glace ou bras d'entraînement.

De manière connue, non représentée en détail, chaque balai d'essuie-glace 14 comporte au moins une lame d'essuyage qui est une lame souple en matériau élastomère, naturel ou synthétique, dont un bord inférieur d'orientation longitudinale selon la direction générale longitudinale du balai d'essuie-glace 14, coopère avec la surface extérieure du pare-brise 12 pour en assurer le nettoyage et/ou l'essuyage.

Une extrémité proximale 18 de chaque porte-balai 16 est reliée à un moteur d'entraînement 20, tandis qu'une extrémité distale 22 de chaque porte-balai 16 est reliée au balai d'essuie-glace 14 qu'il porte.

Chaque moteur d'entraînement 20 est conçu pour entraîner le porte-balai 16 en balayage dans un mouvement de pivotement alterné, ou mouvement de rotation cyclique, selon une portion d'arc de cercle, autour d'un axe de pivotement ou de rotation dont l'orientation générale est globalement orthogonale à l'orientation générale longitudinale du porte-balai 16.

De manière connue, chaque moteur d'entraînement 20 comporte un arbre de sortie, non représenté, qui transmet au porte-balai 16 associé, un couple d'entraînement, directement ou par exemple par l'intermédiaire d'une tringlerie.

Chaque moteur d'entraînement 20 est par exemple un moteur électrique et les moteurs d'entraînement 20 sont reliés à une source 24 de puissance électrique, tels que par exemple une batterie d'accumulateurs du véhicule, ou un alternateur.

Chaque moteur d'entrainement 20 est par exemple relié à la source 24 de puissance électrique par l'intermédiaire d'une unité 26 de pilotage et de contrôle du système d'essuyage 10.

L'unité 26 de pilotage et de contrôle est notamment conçue et configurée pour gérer le fonctionnement du système d'essuyage 10 selon plusieurs programmes prédéfinis d'utilisation, par exemple en contrôlant la vitesse d'entraînement en rotation des porte-balai 16 par régulation du courant fourni aux moteurs d'entraînement 20, pour une valeur donnée de la tension d'alimentation des moteurs d'entraînement 20 fournie par la source de puissance électrique 24.

Plus précisément, l'unité 26 de pilotage et de contrôle comprend par exemple une interface d'entrée, une mémoire de données, une mémoire de programmes, un calculateur, une interface de sortie et au moins un bus de communication par l'intermédiaire duquel les interfaces d'entrée et de sortie, les mémoires de données et de programmes et le calculateur communiquent entre eux.

L'unité 26 de pilotage et de contrôle est par exemple configurée pour mettre en oeuvre un procédé destiné au suivi de l'utilisation du système d'essuyage 10 d'un véhicule automobile. Un exemple de procédé 100 est décrit plus en détail ci-après.

Les interfaces d'entrée et/ou de sortie sont par exemple reliées à une interface utilisateur ménagée dans l'habitacle de l'utilisateur. L'interface utilisateur peut par exemple comprendre un écran tactile.

L'interface d'entrée peut en outre être reliée à des moyens configurés pour mesurer la consommation de puissance ou le couple de sortie d'au moins un moteur 20 en fonctionnement. En variante, les moyens sont par exemple configurés pour mesurer le couple de frottement du balai d'essuie-glace 14 sur la vitre 12 ou le coefficient de friction du balai d'essuie-glace 14 sur la vitre 12.

A titre complémentaire et non limitatif, le système d'essuyage 10 comprend encore un capteur 28 de pluie qui est relié à l'unité de pilotage et de contrôle 26, notamment via l'interface d'entrée.

Le système d'essuyage 10 comprend encore un dispositif 30 de nettoyage de la surface extérieure du pare-brise, qui comporte une pompe 32 qui est reliée à l'unité de pilotage et de contrôle 26, notamment via l'interface de sortie, et à la source de puissance électrique 24, et qui est conçue pour prélever du liquide de lave-glace 34 dans un réservoir 36 pour l'acheminer jusqu'à des moyens de projection du liquide sur la surface extérieure du pare-brise 12, ces moyens de projection étant par exemple des buses 38 agencées sur le capot du véhicule automobile ou bien portées par les balais d'essuie-glace 14 ou bien par les porte-balai 16. Le dispositif 30 de nettoyage de la surface extérieure du pare-brise permet la mise en oeuvre d'une fonction nettoyage du système d'essuyage 10.

Le réservoir 36 est par exemple muni d'un capteur de niveau conçu notamment pour détecter lorsque le réservoir 36 est vide.

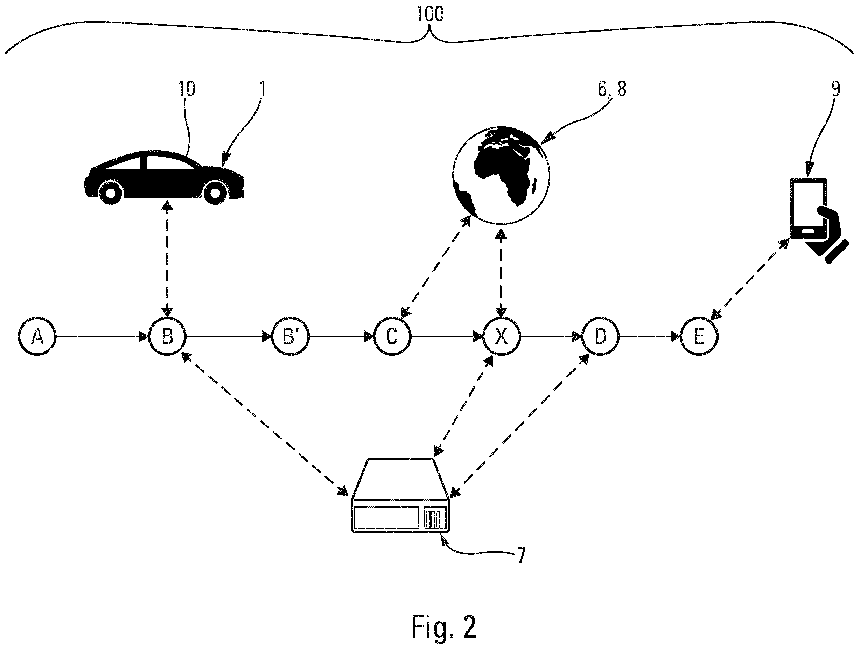

Comme illustré à la figure 2, le procédé 100 permet la détection d'une utilisation anormale du système d'essuyage 10 en comparant les conditions d'utilisation du système d'essuyage 10 à une liste préétablie de situations anormales.

Le procédé 100 comprend tout ou partie des étapes suivantes, notamment successivement et dans cet ordre:
- une étape A de collecte d'une ou plusieurs données relatives au déclenchement du système d'essuyage 10,
- une étape B de collecte d'une ou plusieurs données relatives au véhicule 1 et/ou à son environnement,
- une étape B' de transformation de l'une au moins des données collectées aux étapes précédentes, dites données de suivi, en une ou plusieurs valeurs, dites valeurs de suivi,
- une étape C de comparaison des valeurs de suivi à des valeurs, dites valeurs seuils prédéterminées, chacune des valeurs de suivi étant comparée à la valeur seuil prédéterminée correspondante,
- une étape D d'enregistrement des données de suivi lorsque certaines des valeurs de suivi atteignent la valeur seuil correspondante.

On note que le procédé 100 peut comprendre en outre une étape X de collecte de données externes de suivi.

De plus, le procédé 100 peut encore comprendre une étape E d'avertissement d'un utilisateur du véhicule automobile lorsqu'une situation anormale d'utilisation du système d'essuyage 10 est détectée.

L'étape A correspond à une étape de détection d'une activation du système d'essuyage 10. On note que l'activation du système d'essuyage 10 visée à cette étape A peut être, par exemple :
- soit une activation déclenchée directement par l'utilisateur,
- soit une activation automatique notamment après une détection de pluie par le détecteur de pluie du véhicule automobile.

La détection de l'activation du système d'essuyage 10 correspond ici à la première étape du procédé 100.

Les données relatives au véhicule 1 et/ou à son environnement visées à l'étape B sont dites données internes. Autrement dit, les données relatives au véhicule 1 et/ou à son environnement visées à l'étape B sont des données accessibles directement depuis le véhicule automobile 1. Autrement dit encore, les données internes sont des données qui peuvent être fournies par le véhicule lui-même, en particulier par des capteurs du véhicule automobile. Notamment, les données internes ne nécessitent pas de connexion internet pour être collectées lors de cette étape B.

Les données internes comprennent par exemple:
- la position géographique du véhicule lors de l'utilisation du système d'essuyage 10, telle que fournie par exemple par un capteur GPS du véhicule automobile 1,
- la détection de l'utilisation de la fonction nettoyage du pare-brise,
- la détection de l'arrêt du système d'essuyage 10,
- la présence ou l'absence de pluie lors de l'utilisation du système d'essuyage, détectée par le capteur 28 de pluie du véhicule automobile 1,
- le taux d'humidité lors de l'utilisation du système d'essuyage 10, mesuré par un détecteur d'humidité du véhicule automobile 1,
- la température extérieure lors de l'utilisation du système d'essuyage 10, mesurée par un capteur de température du véhicule automobile 1,
- le niveau du réservoir 36 détecté par le capteur de niveau,
- la date et l'heure d'utilisation du système d'essuyage 10 indiquée par une horloge interne du véhicule automobile 1,
- le type des balais d'essuie-glace 14 et/ou leur durée de vie moyenne,
- la vitesse de déplacement du véhicule automobile 1 lors de l'utilisation du système d'essuyage 10,
- l'amplitude angulaire de pivotement des balais d'essuie-glace 14.

Les données collectées à l'étape B sont par exemple stockées temporairement sur un module de stockage 7 agencé dans le véhicule automobile 1.

On note, en outre, que les différents capteurs du véhicule automobile 1, notamment les capteurs d'humidité et de pluie 28 ou encore le capteur de température, permettent une première estimation des conditions météorologiques auxquelles est confronté le véhicule automobile 1. Comme on le verra par la suite, ces données internes relatives aux conditions météorologiques, dites données météorologiques internes, peuvent éventuellement être confirmées ou infirmées par des données météorologiques dites externes qui sont, elles, collectées lors de l'étape X.

On note, par ailleurs, que les informations relatives au type des balais d'essuie-glace 14 et à leur durée de vie moyenne sont ici stockées dans le véhicule automobile 1. Ces informations pourront avoir été renseignées lors d'une installation des balais d'essuie-glace 14 par un constructeur automobile, par un réparateur ou encore par l'utilisateur du véhicule automobile 1 lui-même.

L'étape X consiste, elle, en une collecte de données externes. Les données externes sont des données qui ne sont pas directement accessibles depuis le véhicule automobile 1. En d'autres termes, les données externes ne sont pas générées ni fournies par les capteurs du véhicule automobile. Les données externes sont ici des données qui proviennent par exemple d'un serveur 8 situé à distance du véhicule automobile, ledit serveur 8 étant accessible via une connexion internet.

On note que les données externes collectées à l'étape X sont par exemple stockées temporairement sur le module de stockage 7.

Ici, les données externes comprennent notamment des informations relatives aux conditions météorologiques désignées dans la suite « données météorologiques externes ». En particulier, les données météorologiques externes correspondent aux conditions météorologiques dans lesquelles évoluait le véhicule automobile 1 au moment où a été activé le système d'essuyage 10.

Afin de récupérer ces données météorologiques externes, il est possible d'utiliser une partie des données internes collectées à l'étape B dont la date, l'heure et la position géographique du véhicule automobile 1. Plus particulièrement, les données météorologiques externes peuvent être obtenues en interrogeant, à partir des données internes collectées lors de l'étape B, le serveur 8 afin d'obtenir les conditions météorologiques lors de l'utilisation du système d'essuyage 10.

On note que les données internes collectées à l'étape B et les données externes collectées à l'étape X constituent des données, dites données de suivi, du véhicule automobile. En d'autres termes, on appelle « données de suivi » les données collectées à l'une et l'autre des étapes B et X.

L'étape C est mise en oeuvre postérieurement l'étape B. On note ici que les données de suivi comparées lors de l'étape C peuvent ne contenir que des données internes, notamment dans le cas où l'étape C est mise en oeuvre avant la mise en oeuvre de l'étape X. En variante, les données de suivi comparées lors de l'étape C comprennent des données internes et des données externes, notamment dans un cas où l'étape C interviendrait après les étapes X et B.

Dans l'étape C, les données de suivi sont comparées à des valeurs, dites valeurs seuils prédéterminées. Les valeurs seuils prédéterminées comprennent ici des valeurs préenregistrées de paramètres du véhicule automobile 1 et de son environnement correspondant à des situations dans lesquelles l'utilisation du système d'essuyage 10 est déconseillée car favorisant une détérioration anormale de celui-ci.

En d'autres termes, les valeurs seuils prédéterminées correspondent par exemple à une liste de valeurs de paramètres ou de combinaisons de valeurs de paramètres qui indiquent une situation anormale d'utilisation du système d'essuyage 10. A titre illustratif, nous avons listé ci-dessous, de manière non limitative, quelques exemples de valeurs seuils prédéterminées ou de combinaison de valeurs seuils prédéterminées qui correspondent à une utilisation anormale du système d'essuyage 10:
- activation de la fonction nettoyage du pare-brise ET réservoir 36 de liquide de lave-glace vide,
- température extérieure inférieure à 3 degrés Celsius ET présence de pluie,
- blocage du moteur d'entraînement du système d'essuyage 10,
- amplitude angulaire anormalement faible du pivotement d'un des balais d'essuie-glace 14.

Lorsqu'il y a une correspondance entre les données de suivi et les valeurs seuils prédéterminées, cela signifie que le système d'essuyage 10 est potentiellement utilisé de manière anormale. L'étape C permet donc, en comparant les données de suivi aux valeurs seuils prédéterminées, de détecter les situations favorisant une détérioration du système d'essuyage 10.

Les valeurs seuils prédéterminées peuvent par exemple être stockées sous la forme d'une grille de valeurs. On entend par « grille de valeurs » une base de données, un tableau, une liste ou encore un abaque. On note que les valeurs seuils prédéterminées sont par exemple stockées directement sur le module de stockage 7 agencé dans le véhicule automobile 1.

En variante, les valeurs seuils prédéterminées sont stockées à distance du véhicule automobile, par exemple sur un serveur 6 accessible via internet. L'étape C comprend, dans ce cas, une sous-étape de connexion audit serveur 6. Une fois la connexion établie il est alors possible de comparer les données de suivi aux valeurs seuils prédéterminées.

Une fois les données de suivi comparées aux valeurs seuils prédéterminées, les données de suivi sont classées dans l'une ou l'autre des catégories suivantes:
- Une première catégorie comprend les données de suivi correspondant à une situation anormale d'utilisation du système d'essuyage 10.
- Une deuxième catégorie comprend les données de suivi qui ne correspondent pas à des situations anormales d'utilisation du système d'essuyage 10.

L'étape B' est avantageusement mise en oeuvre avant l'étape C. L'étape B' consiste en une transformation de tout ou partie des données de suivi en valeurs, dites valeurs de suivi. Autrement dit, l'étape B' consiste en l'affectation d'une valeur, notamment une valeur numérique, à chacune des données de suivi. Par la suite, l'étape C consiste alors en une comparaison entre les valeurs seuils prédéterminées et les valeurs de suivi. Lorsqu'au moins l'une des valeurs de suivi atteint ou dépasse une valeur seuil prédéterminée correspondante, cela signifie que le système d'essuyage 10 est utilisé dans des conditions anormales.

L'étape D succède ici à l'étape C. Lorsqu'une situation anormale d'utilisation du système d'essuyage 10 a été détectée alors l'étape D consiste en l'enregistrement de tout ou partie des données de suivi. Les données de suivi sont alors stockées par exemple dans le module de stockage 7 du véhicule automobile 1. On note que les données de suivi peuvent éventuellement être stockées sous la forme de valeurs de suivi.

Le stockage des données de suivi permet avantageusement un suivi, dans la durée, de l'utilisation du système d'essuyage 10 par l'utilisateur du véhicule automobile. On note que les données de suivi stockées peuvent par exemple être utilisées par un assureur, un équipementier automobile, un concessionnaire automobile et/ou le constructeur du véhicule automobile lors d'un retour client et/ou pour l'analyse de pièces sous garantie, notamment afin de vérifier que l'utilisateur a bien respecté d'éventuelles consignes d'utilisation du système d'essuyage 10. Par ailleurs, le stockage des données de suivi permet également, comme on le verra dans la suite, d'alerter l'utilisateur sur une utilisation anormale et répétée qu'il ferait du système d'essuyage 10.

Au contraire, lorsqu'aucune situation anormale d'utilisation du système d'essuyage 10 n'a été détectée durant l'étape C, alors les données de suivi ne sont pas conservées. La suppression ou la non conservation des données de suivi permet alors de limiter une occupation inutile du module de stockage 7.

On note que l'étape X, précédemment décrite, peut être mise en oeuvre:
- après l'étape B et avant l'étape C ou
- après l'étape C et, avantageusement, seulement dans le cas où une situation anormale d'utilisation du système d'essuyage 10 a été détectée.

Par exemple, l'étape X peut être utilisée pour confirmer ou infirmer les données météorologiques internes collectées durant l'étape B. Par exemple, si l'une des données internes collectées à l'étape B indique que la température extérieure est inférieure à 3 degrés Celsius, alors les données météorologiques externes peuvent permettre de confirmer ou d'infirmer cette information. De même, les données météorologiques externes peuvent permettre de confirmer ou d'infirmer les données météorologiques internes fournies par le capteur 28 de pluie.

Dans le cas où l'étape X est mise en oeuvre après l'étape D, on peut alors envisager, lorsque les données météorologiques externes infirment les données météorologiques internes, de supprimer du module de stockage 7 les données de suivi qui y ont été préalablement enregistrées. Au contraire, dans le cas où les données météorologiques externes confirment les donnés météorologiques internes, alors les données de suivi sont conservées.

Le procédé comprend en outre une étape E d'avertissement, qui consiste à produire un signal d'avertissement lorsqu'une situation anormale d'utilisation du système d'essuyage 10 a été détectée.

L'étape d'avertissement E consiste ici en l'émission d'un signal d'avertissement en particulier à destination de l'utilisateur du véhicule et/ou d'une personne chargée de la maintenance du balai d'essuie-glace 14 et/ou d'un assureur. Le signal d'avertissement est par exemple un signal d'information en vue d'alerter sur une utilisation anormale du système d'essuyage 10.

Le signal d'avertissement peut par exemple être affiché sur l'interface utilisateur. Le signal d'avertissement est par exemple affiché immédiatement sur ladite interface utilisateur.

Le signal d'avertissement peut aussi être transmis et affiché sur tout appareil de communication à distance à disposition de l'utilisateur ou d'un service de maintenance, par exemple sur un téléphone portable 9 de l'utilisateur.

## Revendications

1. Procédé (100) de suivi de l'utilisation d'un système d'essuyage (10) d'un véhicule automobile (1), comprenant les étapes suivantes :
- une étape de collecte d'au moins une donnée relative au déclenchement du système d'essuyage (10),
- une étape de collecte d'au moins une donnée relative au véhicule automobile (1) et/ou à son environnement,
- une étape de transformation de l'une au moins des données collectées aux étapes précédentes en une valeur, dite valeur de suivi,
- une étape de comparaison de la valeur de suivi à une valeur, dite valeur seuil prédéterminée,
- une étape d'enregistrement de l'une au moins des données collectées lorsque la valeur de suivi atteint ou dépasse la valeur seuil prédéterminée.

2. Procédé (100) selon la revendication précédente dans lequel la valeur de suivi est comparée à une grille de valeurs seuils prédéterminées.

3. Procédé (100) selon la revendication précédente dans lequel les valeurs seuils prédéterminées sont stockées sur un serveur (6) à distance du véhicule automobile (1), l'étape de comparaison comprenant une sous-étape de connexion, notamment via internet, audit serveur (6).

4. Procédé (100) selon l'une quelconque des revendications précédentes dans lequel la au moins une donnée relative au véhicule automobile (1) et/ou à son environnement comprend une ou plusieurs données parmi la position géographique du véhicule automobile (1), les conditions météorologiques, la présence de pluie ou de neige, la température extérieure, le niveau d'un réservoir (36) de liquide de lave-glace, la date, l'heure, le type de balais d'essuie-glace (14), la durée de vie moyenne des balais d'essuie-glace (14) et l'amplitude angulaire de pivotement des balais d'essuie-glace (14).

5. Procédé (100) selon l'une quelconque des revendications précédentes dans lequel l'enregistrement de l'une au moins des données collectées se fait dans un module de stockage (7) du système d'essuyage (10).

6. Procédé (100) selon l'une quelconque des revendications précédentes comprenant une étape de suppression des données collectées et/ou de la valeur de suivi lorsque la valeur de suivi n'atteint ni ne dépasse la valeur seuil prédéterminée.

7. Procédé (100) selon l'une quelconque des revendications précédentes comprenant une étape de génération d'un signal d'avertissement à destination d'un utilisateur du véhicule automobile (1) lorsque la valeur de suivi atteint ou dépasse la valeur seuil prédéterminée correspondante.

8. Procédé (100) selon la revendication précédente dans lequel le signal d'avertissement est envoyé vers un téléphone portable (9) de l'utilisateur.

9. Procédé (100) selon l'une quelconque des revendications 7 ou 8, comprenant en outre une étape d'affichage du signal d'avertissement sur le tableau de bord du véhicule automobile (1).

10. Procédé (100) selon l'une quelconque des revendications 7 à 9, comprenant en outre une étape d'affichage du signal d'avertissement sur un écran à bord du véhicule automobile (1).

11. Système d'essuyage (10) d'un véhicule automobile comprenant une unité de pilotage (26) conçue de manière à mettre en oeuvre le procédé (100) selon l'une quelconque des revendications précédentes.
